Europäisches Patentamt

**European Patent Office**

Office européen des brevets

(19)

(11) Publication number: **0 065 834**
**A2**

(12) **EUROPEAN PATENT APPLICATION**

(21) Application number: **82302302.3**

(22) Date of filing: **06.05.82**

(51) Int. Cl.³: **B 23 Q 1/06**
**B 23 Q 1/00**

(30) Priority: **12.05.81 GB 8114518**

(43) Date of publication of application:
**01.12.82 Bulletin 82/48**

(84) Designated Contracting States:
**CH DE FR IT LI**

(71) Applicant: **DEVLIEG MACHINE COMPANY LTD.**
**Leicester Road**
**Lutterworth Leicestershire LE17 4HE(GB)**

(72) Inventor: **Peacock, Colin John**
**19 Marriotts Road**
**Long Buckby Northamptonshire(GB)**

(74) Representative: **Waite, Anthony William et al,**
**MARKS & CLERK Alpha Tower ATV Centre**
**Birmingham B1 1TT(GB)**

(54) Machine tool with twin work tables.

(57) A pair of work tables 11 and 12 are movable independently of one another along a bed 10 to bring workpieces mounted thereon under a work spindle 15 for machining. Neither of the work tables 11 and 12 is itself driven, the tables being moved by a drive member 20 which can be secured selectively to one or the other or both of the work tables and which is driven along the bed 10. By securing the driving member 20 to both work tables at once, a large workpiece can be supported for machining.

FIG.1.

EP 0 065 834 A2

This invention relates to a machine tool of the type having two work tables.

The configuration of a machine tool with two work tables is well known. Normally, one table is used to traverse a workpiece or workpieces relative to a cutting tool, while the second table, static at one end of the machine tool, is being unloaded and loaded by the operator. Once both machining and unloading/loading operations are complete, the roles of the work tables are reversed, with the table supporting the machined workpiece being moved to a static position for unloading and loading, and the newly loaded table moving the new workpiece to the cutting tool. To support exceptionally large components the tables may be connected together so that they move in unison.

The mechanical drive to such an assembly usually takes the form of a worm drive disposed in the bed of the machine tool, the worm engaging in half nuts which run the entire length of the work tables on the undersides of the latter. Alternatively, an arrangement of screws engaging in nuts secured to the underside of the tables can be employed. In the former arrangement, a single table cannot be used beyond the travel limited by the length of table and hence halfnut itself. In the latter arrangement, the physically acceptable length of the drive screw limits the amount of travel of the table.

It is an object of the present invention to obviate or mitigate these limitations.

According to the present invention, a machine tool comprises a bed, a pair of work tables movable independently of one another along the bed, and a drive member which can be secured selectively to one or the other or both of the work tables, the drive member itself being movable along the bed by means of a drive.

In this way, workpieces on the work tables can be positioned relative to a work spindle of the machine tool or can be moved past the work spindle under or in front of the latter by suitable operation of the drive member.

The drive can comprise a driven element on the drive member engaging an element fixed with respect to the bed, or a driven element on the bed engaging an element fixed with respect to the drive member.

Preferably, the work tables and the drive member are movable commonly along a longitudinal axis of the bed, and location means is desirably provided on the drive member and on the work tables to ensure accurate registration thereof in a direction transverse to said longitudinal axis.

Advantageously, the drive member in addition to the work tables has means thereon enabling a workpiece to be secured thereto.

The invention is applicable to systems wherein the drive member and the work tables are linked together automatically, as well as to semi-automatic systems wherein the drive member and the work tables are secured together manually by intervention of the machine tool operator.

The invention will now be further described, by way of example, with reference to the accompanying drawings, in which:-

Figure 1 is a schematic plan view of a machine tool according to the present invention;

Figure 2 is a schematic side view of the machine
tool shown in Figure 1;

Figure 3 is a schematic plan view of a drive unit
which forms part of the machine tool shown in Figures 1
and 2; and

Figures 4(a) to 4(d) are schematic plan views showing
the machine tool at various stages in its operation.

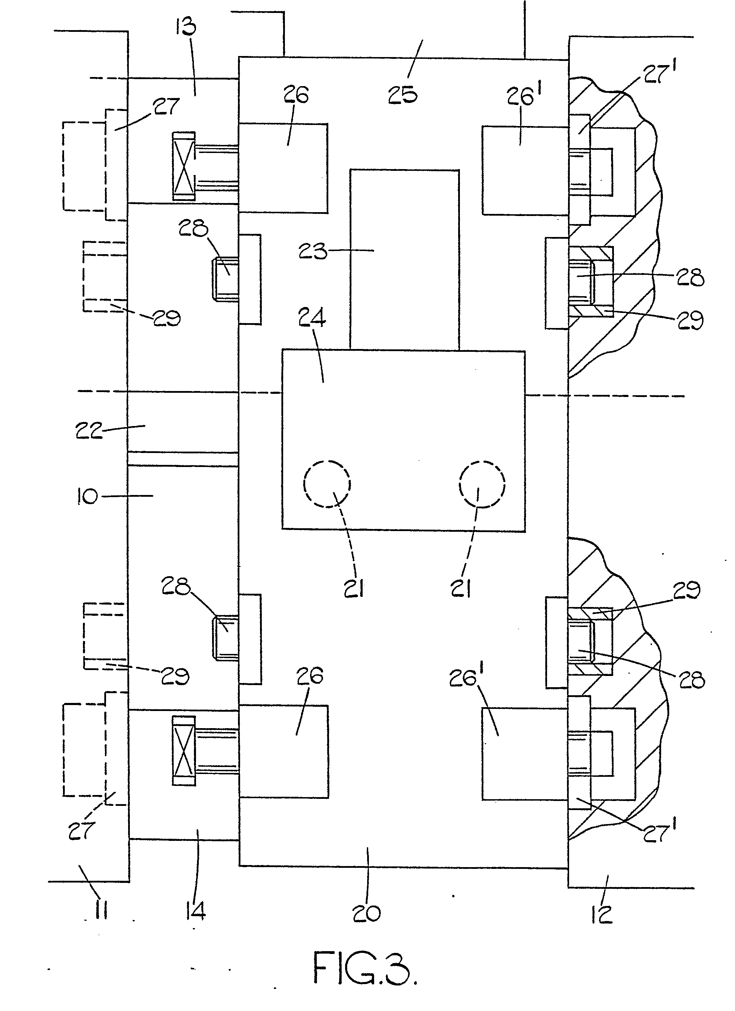

The machine tool shown in the drawings is a vertical
spindle portal frame boring and milling machine, and
comprises a bed 10 along the longitudinal axis of which
two work tables 11 and 12 are slidable on common bed ways
13 and 14. A vertically disposed, rotatable cutting
spindle 15 is housed in a spindle head 16 which moves
laterally across the bed 10 supported by a beam 17, the
beam 17 being held in position on columns 18 and 19. A
drive unit 20 is also movable along the longitudinal axis
of the bed 10 and is disposed between the work tables 11
and 12. Such movement of the drive unit 20 is performed
by means of a pinion or pinions 21 (see Figure 3) which
engage a rack 22 rigidly secured to the bed 10, the pinion
or pinions 21 being rotated by means of a motor 23 and a
gearbox 24 mounted on a frame of the drive unit 20.
Advantageously, the drive unit 20 rests on the same ways 14
and 15 as the work tables 11 and 12, although this is not
essential. The drive unit 20 is supplied with all
essential services, such as electrical and hydraulic
supplies, by means of a suitably mounted drag chain 25.

Referring more particularly to Figure 3, the frame of
the drive unit 20 also mounts two sets of clamping devices
26 and 26' which can engage matching devices 27 and 27' in
the ends of the tables 11 and 12 respectively. The clamping
devices in each set work in unison, but the two sets can
be controlled independently so that either table 11 or
table 12 or both tables can be secured to the drive unit 20 at any one time. Such control of the clamping devices may be performed automatically, or alternatively can be effected manually by an operator of the machine. Accurate registration of the drive unit 20 and the work tables 11 and 12 transversely of the bed 10 is ensured by a plurality of location devices 28 on the unit 20 which are engageable with bushes 29 or other suitable devices in the ends of the tables.

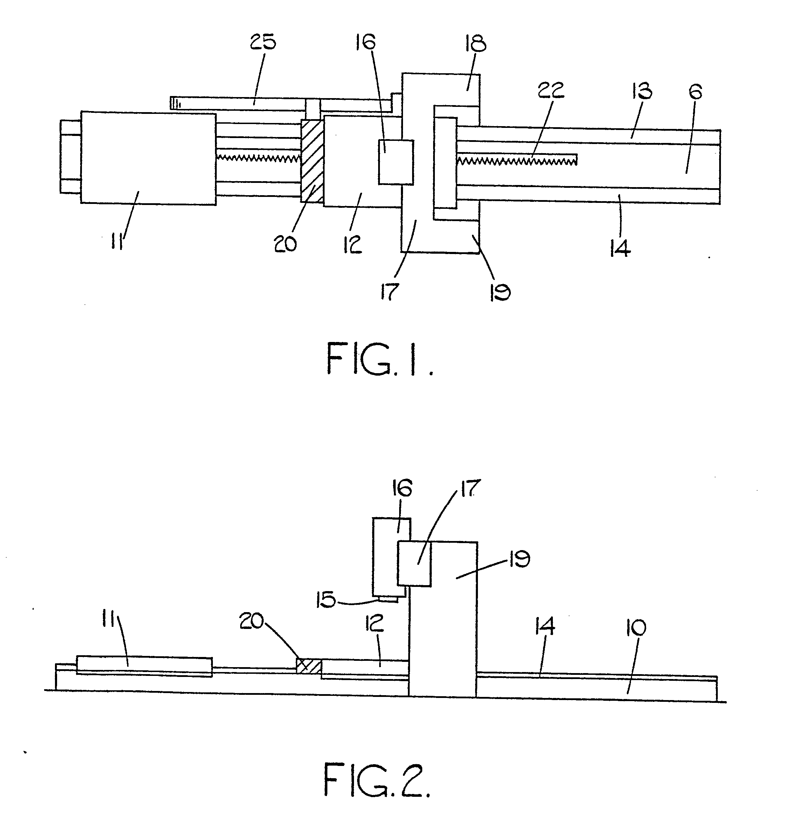

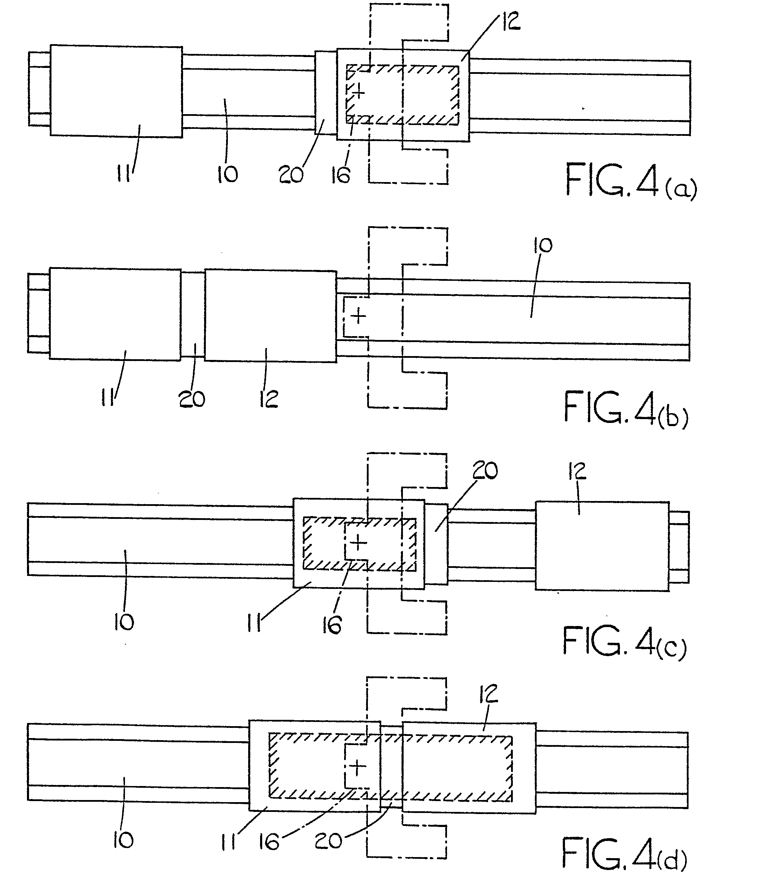

A typical sequence of operations of the machine will now be described with reference to Figures 4(a) to 4(d). In Figure 4(a), the work table 11 is static at the left-hand end of the bed 10 for the loading thereon of a workpiece to be machined, while the work table 12 is disposed beneath the spindle head 16 so that a workpiece thereon can be machined. At this time, the drive unit 20 is attached to the work table 12 in the manner also depicted in Figures 1, 2 and 3. After machining of the workpiece has been completed and a new workpiece has been loaded on the work table 11, the drive unit 20 with the table 12 still attached moves to the left-hand end of the bed 10 to collect the table 11, as illustrated in Figure 4(b). With both of the tables attached thereto, the drive unit 20 then moves to the right-hand end of the bed 10 where it leaves the table 12 so that the machined workpiece can be unloaded therefrom and a fresh workpiece can be loaded thereon. Following this, the drive unit 20 moves the table 11 to a position below the spindle head 16 so that machining of the new workpiece can commence, as shown in Figure 4(c). When the machining of the workpiece has been completed, the above-described sequence of operations is repeated mutatis mutandis to return the table 11 to the left-hand end of the bed 10 and to position the table 12 beneath the spindle head 16.

Figure 4(d) shows the situation where a large workpiece to be machined is supported by both of the work
tables together, the drive unit 20 in this case being
secured to both tables.

Because there is no theoretical limit to the length
of bed 10 and hence of the rack 22, it follows that using
this system there is no theoretical limit to the length of
movement of the tables. For example, the machine tool
may be designed so that each table of say 5 metres length
has a travel of say 7 metres. This will allow each
end of a 5 metre workpiece to be machined by use of a
suitable right-angle attachment on the cutting head, or
alternatively will allow the complete machining of a workpiece longer than an individual table. Similarly, when
both tables are attached to the drive unit 20 and are being
used as one, the design may be such that the ends of the
complete moving assembly can pass beyond the axis of the
cutting spindle 15.

In the embodiment described above, the prime mover
for the drive unit 20 is a motor 23 driving a pinion or
pinions 21 via a gearbox 24. The pinion or pinions engage
the rack 22 attached to the machine bed 10 and thus, by
rotation of the motor 23, the drive unit 20 and the table
or tables attached to it are caused to move along the ways
13 and 14. Alternatively, however, other types of drive
may be employed. For example, a long half nut can be
secured to the machine bed 10 in place of the rack 22 with
the motor and gearbox driving an engaging worm, or, where
length of travels allow the use of a leadscrew, a non-
rotating leadscrew may be supported on the bed in place of
the rack 22, with the motor and gearbox driving a rotating
nut about the leadscrew to cause linear movement of drive
unit and tables. As a further alternative, a rotating
leadscrew may be incorporated with a non-rotating nut secured to the drive unit. In this case the motor and gearbox driving the leadscrew would be mounted on the bed of the machine and not in the drive unit 20.

The top surface of the drive unit 12 may be equipped with tee slots or other aids to the clamping of workpieces when required.

Sensing means may be provided so that the position of the drive unit 20 along the machine bed 10 can be determined. The sensing means preferably takes the form of a transducer which may conveniently be mounted on the drive unit 20 itself.

CLAIMS :


1.    A machine tool comprising a bed (10) having a pair of
work tables (11,12) movable therealong, characterised in
that the work tables (11,12) are movable independently
of one another along the bed (10), and a drive member (20)
which is itself movable along the bed (10) by means of a
drive (21,23) and can be secured selectively to one or
the other or both of the work tables (11,12).


2.    A machine tool as claimed in Claim 1, wherein the
drive comprises a driven element (21) on the drive member
(20) engaging an element (22) fixed with respect to the
bed (10).


3.    A machine tool as claimed in Claim 2, wherein the
driven element is at least one pinion (21) and the fixed
element is a rack (22).


4.    A machine tool as claimed in Claim 2, wherein the
driven element is a worm and the fixed element is an elongate
half nut.


5.    A machine tool as claimed in Claim 2, wherein the
driven element is a rotatable nut and the fixed element
is a non-rotating lead screw.


6.    A machine tool as claimed in Claim 1, wherein the
drive comprises a driven element on the bed engaging an
element fixed with respect to the drive member.

7. A machine tool as claimed in Claim 6, wherein the driven element is a rotatable lead screw and the fixed element is a non-rotating nut.

8. A machine tool as claimed in any preceding Claim, wherein the work tables (11,12) and the drive member (20) are movable commonly along a longitudinal axis of the bed (10).

9. A machine tool as claimed in Claim 8, wherein location means (28,29) is provided on the drive member (20) and on the work tables (11,12) to ensure accurate registration thereof in a direction transverse to said longitudinal axis.

10. A machine tool as claimed in any preceding Claim, wherein the drive member (20) in addition to the work tables (11,12) has means thereon enabling a workpiece to be secured thereto.

11. A machine tool as claimed in any preceding Claim, wherein the work tables (11,12) are slidable on common bed ways (13,14), and the drive member (20) is slidable on the same bed ways (13,14) as the work tables (11, 12).

FIG.1.

FIG.2.

FIG.3.

FIG.4 (a)

FIG.4 (b)

FIG.4 (c)

FIG.4 (d)